# EUROPÄISCHE PATENTANMELDUNG

(11) **EP 2 325 084 A1**
(43) Veröffentlichungstag der Anmeldung: **25.05.2011**
(21) Anmeldenummer: 09176277.3
(22) Anmeldetag: 18.11.2009
(51) Int. Cl.: B64D 47/06

(54) **Leuchte für ein Fahrzeug, insbesondere Flugzeug**

(71) Anmelder: Goodrich Lighting Systems GmbH, 59557 Lippstadt (DE)
(72) Erfinder: Wernicke, Alexander, 59555, Lippstadt (DE); Beier, Enrico, 59557, Lippstadt (DE)
(74) Vertreter: von Kreisler Selting Werner

(57) **Zusammenfassung**

Die Leuchte für ein Fahrzeug, insbesondere Positions- oder Warnleuchte (10) für ein Flugzeug, weist eine Montagefläche (13) für LEDs auf. Ferner weist die Leuchte mindestens eine erste LED (18) sowie ein der ersten LED zugeordnetes Lichtleiterelement (16) zum Leiten des Lichts der ersten LED (18) und zum Ausgeben des Lichts mit einer vorgegebenen ersten Lichtintensitätsverteilung in einem ersten Raumwinkelbereich (19,19') auf. Die Leuchte (10) ist mit einem von der Montagefläche (13) aufragenden Halter (14) für das Lichtleiterelement (16) versehen, wobei der Halter (14) eine Außenseite (20) aufweist. Ferner ist die Leuchte (10) mit mehreren zweiten LEDs (26) versehen, die auf der Montagefläche (13) neben dem Halter (14) angeordnet sind und denen zur Erzeugung von Licht mit einer zweiten Lichtintensitätsverteilung in einem zweiten Raumwinkelbereich (28,28') als Reflektionsflächen (22) und/oder Lichtabschottungselemente (24) ausgebildete Bereiche der Außenseite (20) des Halters (14) zugeordnet sind.

## Beschreibung

Die Erfindung betrifft eine Leuchte für ein Fahrzeug und insbesondere eine Positions- oder Warnleuchte für ein vorzugsweise Flugzeug.

Die bisher gebräuchlichsten optischen Systeme für Beleuchtungsfunktionen, wie sie beispielsweise von Positions- und Warnleuchten von Flugzeugen wahrgenommen werden, weisen Reflektoren und Linsen auf. Mit der Verbreitung leistungsfähiger LEDs lassen sich aber bei diesen Leuchten auch TIR-(totale interne Reflektion) Optikelemente, d.h. Lichtleiterelemente technisch gut einsetzen. Ein Lichtleiterelement ist üblicherweise als transparenter Vollkörper ausgeformt und hat damit ein entsprechendes Gewicht, das sicher gehalten werden muss. Der Vorteil von Lichtleiterelementen wird in der Möglichkeit gesehen, auf relativ einfache und effektive Art und Weise mit hohem Wirkungsgrad innerhalb eines auszuleuchtenden Raumwinkelbereichs lokal größere bestehende bzw. vorgegebene Lichtintensitäten zu erzeugen. Damit bieten sich Lichtleiterelemente in Leuchten für Flugzeuge an, um im auszuleuchtenden Raumwinkelbereich basierend auf einer Basislichtintensitätsverteilung zusätzlich innerhalb eines Teilbereichs dieses Raumwinkelbereichs eine erhöhte Lichtintensität im abgestrahlten Licht zu erzeugen.

Lichtleiterelemente, die auf dem Prinzip der totalen internen Reflektion basieren, sind bei Positionsleuchten für Flugzeuge beispielsweise aus US-A-2005/0068777 bekannt.

Aufgabe der Erfindung ist es, eine Leuchte für ein Flugzeug mit einem Halter für ein Lichtleiterelement zu schaffen, mit der sich eine komplexe Lichtverteilung (Lichtintensitätsverteilung) im Raum realisieren lässt, die durch eine ausgeprägte Vorzugsrichtung mit maximaler Lichtintensität gekennzeichnet ist, wie dies üblicherweise für Positionsleuchten von Flugzeugen oder anderen Fahrzeugen gilt. Dabei sollen im Idealfall ausschließlich Standard-LEDs auf einer gemeinsamen Montageebene angeordnet werden können, wobei die LEDs im Wesentlichen eine Lambertsche Lichtverteilung aufweisen, so dass in diese Leuchten auch zukünftige LED-Generationen besonders einfach integriert werden können.

Zur Lösung dieser Aufgabe wird mit der Erfindung eine Leuchte für ein Fahrzeug, insbesondere eine Positions- oder Warnleuchte für ein Flugzeug vorgeschlagen, wobei die Leuchte versehen ist mit
- einer Montagefläche für LEDs,
- mindestens einer ersten LED,
- einem der ersten LED zugeordneten Lichtleiterelement zum Leiten des Lichts der ersten LED und zum Ausgeben des Lichts mit einer vorgegebenen ersten Lichtintensitätsverteilung in einem ersten Raumwinkelbereich,
- einem von der Montagefläche aufragenden Halter für das Lichtleiterelement,
- wobei der Halter eine Außenseite aufweist, und
- mehreren zweiten LEDs, die auf der Montagefläche neben dem Halter angeordnet sind und denen zur Erzeugung von Licht mit einer zweiten Lichtintensitätsverteilung in einem zweiten Raumwinkelbereich als Reflektionsflächen und/oder Lichtabschottungselemente ausgebildete Bereiche der Außenseite des Halters zugeordnet sind.

Die erfindungsgemäße Leuchte weist zwei Gruppen von LEDs auf, wobei jede dieser Gruppen im Extremfall auch lediglich eine einzige LED umfassen kann. Die ersten LEDs (LED bzw. LEDs der ersten Gruppe) speisen ihr Licht in ein ihnen zugeordnetes Lichtleiterelement (TIR-Optik-Element) ein, wobei dieses Lichtleiterelement das empfangene Licht innerhalb eines ersten Raumwinkelbereichs ausgibt, und zwar mit einer vorgegebenen ersten Lichtintensitätsverteilung, Die ersten LEDs sind auf einer Montagefläche der Leuchte angeordnet, von der auch ein Halter für das Lichtleiterelement aufragt. Der Halter weist eine Außenfläche auf, an der Reflektions- und/oder Lichtabschattungsflächenbereiche ausgebildet sind. Neben dem Halter sind zweite LEDs angeordnet, deren Licht über die Reflektionsflächen zur Erzeugung von Licht mit einer zweiten Lichtintensitätsverteilung in einem zweiten Raumwinkelbereich abgegeben wird. Auch kann durch die Lichtabschattungsflächen an der Außenseite des Halters die Ausgabe von Licht gezielt unterbunden werden, so dass sich im zweiten Raumwinkelbereich die gewünschte zweite Lichtintensitätsverteilung einstellt.

Bei der erfindungsgemäßen Leuchte wird also der Halter für das Lichtleiterelement gezielt zur Beeinflussung der Lichtintensitätsverteilung genutzt, indem die Außenseite des Halters mit Reflektionsflächen- und/oder Lichtabschottungselementen versehen ist. Hierdurch stellt sich eine kompakte Bauweise der Leuchte ein. Ferner hat die Montagefläche neben der Halterung für die ersten und zweiten LEDs und den Halter des TIR-Optik-Elements auch noch die Aufgabe, die Lichtabgabe der Leuchte rückwärtig zu begrenzen, was je nach den Anforderungen an die Lichtverteilung und insbesondere an die Raumwinkelbereiche, innerhalb derer kein Licht abgegeben werden darf, von Vorteil ist und bei der lichttechnischen Auslegung der Leuchte mit einbezogen werden kann.

In vorteilhafter Weiterbildung der Erfindung ist vorgesehen, dass das Lichtleiterelement als transparenter Vollkörper mit einem parabelförmigen Mantelflächenverlauf ausgebildet ist.

In weiterer vorteilhafter Ausgestaltung der Erfindung ist vorgesehen, dass jede LED eine optische Achse aufweist, bezüglich derer ihre Lichtverteilung im Wesentlichen symmetrisch ist, wobei die mindestens eine erste LED und die zweiten bzw. zumindest einige der zweiten LEDs unter im Wesentlichen paralleler Ausrichtung ihrer optischen Achsen auf der Montagebene angeordnet sind. Hierdurch ergibt sich eine einfache Montage der Leuchte, indem sämtliche LEDs bzw. im Wesentlichen sämtliche LEDs auf der ggf. gekrümmten Montagefläche direkt aufgebracht sind, ohne dass zusätzliche Montageetemente zur (unterschiedlichen) Ausrichtung der LEDs im Raum erforderlich sind.

Die Erfindung wird nachfolgend anhand eines Ausführungsbeispiels und unter Bezugnahme auf die Zeichnung näher erläutert. Im Einzelnen zeigen dabei:
- Fig. 1: eine Vorderansicht einer Flugzeug-Positionsleuchte,
- Fig. 2: einen Schnitt entlang der Linie II-II der Fig. 1 mit angedeuteter Hori- zontal- Lichtintensitätsverteilung und
- Fig. 3: einen Schnitt entlang der Linie III-III der Fig. 2 mit angedeuteter Vertikal- Lichtintensitätsverteilung.

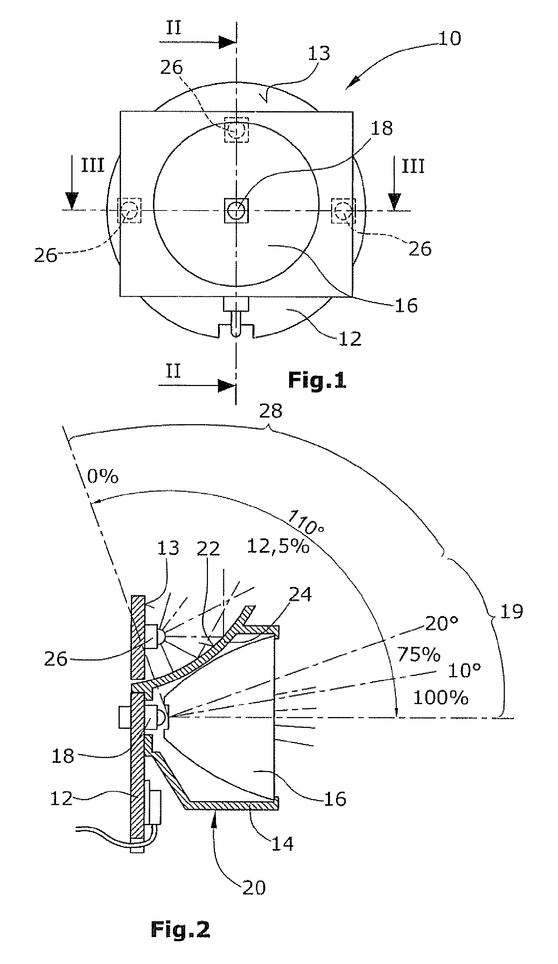

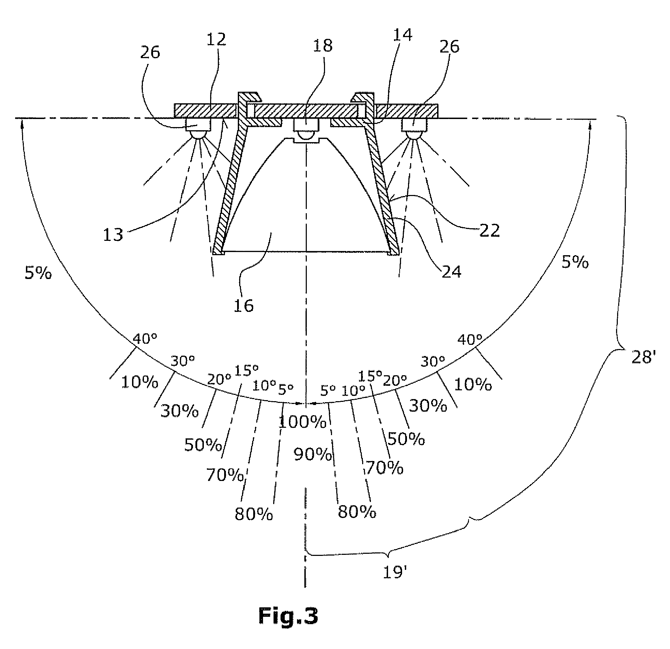

In den Fign. 1 bis 3 ist eine Positionsleuchte 10 für ein Flugzeug gezeigt, wobei das Gehäuse bzw. die Lichtscheibe im Einzelnen nicht dargestellt ist. Die Positionsleuchte 10 umfasst ein Montageelement 12 mit einer Montagefläche 13, auf der mehrere LEDs angeordnet sind. Von der Montagefläche 13 ragt ein Halter 14 für ein als transparenter Vollkörper ausgebildetes Lichtleiterelement 16 auf. Dem Lichtleiterelement 16 ist in diesem Ausführungsbeispiel ein erstes LED-Leuchtmittel 18 zugeordnet, dessen Licht vom Lichtleiterelement 16 transportiert und in einem ersten Raumwinkelbereich 19,19' (siehe Fign. 2 und 3) gemäß einer ersten Lichtintensitätsverteilung abgegeben wird.

Der Halter 14 weist eine umlaufende Außenseite 20 auf, die abschnittsweise als Reflektionsfläche 22 (siehe beispielsweise Fig. 2) oder Lichtabschottungselemente 24 ausgebildet ist. Neben dem Halter 14 sind auf dem Montageelement 12 mehrere zweite LED-Leuchtmittel 26 angeordnet, die mit den Reflektionsflächen 22 bzw. Lichtabschottelementen 24 optisch zusammenwirken, um die Lichtintensitätsverteilung in einem zweiten Raumwinkelbereich 28,28' (siehe ebenfalls Fign. 2 und 3) zu bestimmen.

## Patentansprüche

1. Leuchte für ein Fahrzeug, insbesondere Positions- oder Warnleuchte für ein Flugzeug, mit
- einer Montagefläche (13) für LED-Leuchtmittel,
- mindestens einem ersten LED-Leuchtmittel (18),
- einem dem ersten LED-Leuchtmittel (18) zugeordneten Lichtleiterelement (16) zum Leiten des Lichts des ersten LED-Leuchtmittels (18) und zum Ausgeben des Lichts mit einer vorgegebenen ersten Lichtintensitätsverteilung in einem ersten Raumwinkelbereich (19,19'),
- einem von der Montagefläche (13) aufragenden Halter (14) für das Lichtleiterelement (16),
- wobei der Halter (14) eine Außenseite (20) aufweist, und
- mehreren zweiten LED-Leuchtmitteln (26), die auf der Montagefläche (13) neben dem Halter (14) angeordnet sind und denen zur Erzeugung von Licht mit einer zweiten Lichtintensitätsverteilung in einem zweiten Raumwinkelbereich (28,28') als Reflektionsflächen (22) und/oder Lichtabschottungselemente (24) ausgebildete Bereiche der Außenseite (20) des Halters (14) zugeordnet sind.

2. Leuchte nach Anspruch 1, **dadurch gekennzeichnet, dass** das Lichtleiterelement (16) als transparenter Vollkörper mit einem parabelförmigen oder polynomförmigen Mantelflächenverlauf ausgebildet ist.

3. Leuchte nach Anspruch 1 oder 2, **dadurch gekennzeichnet, dass** jede LED eine optische Achse aufweist, bezüglich derer ihre Lichtverteilung im Wesentlichen symmetrisch ist, und dass die mindestens eine erste LED (18) und die zweiten oder zumindest einige der zweiten LEDs (26) unter im Wesentlichen paralleler Ausrichtung ihrer optischen Achsen auf der Montagefläche angeordnet sind.
